# EUROPÄISCHE PATENTSCHRIFT

(11) **EP 0 798 482 B1**
(45) Veröffentlichungstag und Bekanntmachung des Hinweises auf die Patenterteilung: **05.06.2002**
(21) Anmeldenummer: 97890029.8
(22) Anmeldetag: 20.02.1997
(51) Int. Cl.: F16D 69/02

(54) **Reibsystem**
Friction system
Système de friction

(30) Priorität: 25.03.1996 AT 53596
(43) Veröffentlichungstag der Anmeldung: 01.10.1997
(73) Patentinhaber: HOERBIGER Antriebstechnik GmbH, 86956 Schongau (DE)
(72) Erfinder: Jahn, Wolfgang, 86971 Peiting (DE)
(74) Vertreter: Pinter, Rudolf, Dipl.-Ing.

(56) Entgegenhaltungen:
- EP-A- 0 316 987
- WO-A-82/04295
- WO-A-91/10840
- DE-A- 4 223 417
- DE-C- 3 841 331

## Beschreibung

Die Erfindung betrifft ein Reibsystem, bestehend aus zwei relativ zueinander bewegbaren Reibkörpern, von denen zumindest einer in einem unter Krafteinwirkung mit dem anderen Reibkörper in reibschlüssigem Kontakt bringbaren und dabei kraftübertragenden Bereich einen Reibbelag aufweist, wobei zumindest der Kontaktbereich der beiden Reibkörper ölbenetzt ist, siehe z.B. Dokument EP-0 316 987.

Derartige naßlaufende Reibsysteme mit Reibelementen beispielsweise in Form von Lamellen, Scheiben, Trommeln, Kegeln, Synchronringen und dergleichen, werden zumeist einseitig mit Reibbelägen beschichtet, die die Aufgabe haben, einen hohen, stabilen Reibwert mit einer möglichst kleinen Verschleißrate zu paaren. Bei den bekannten Ausführungen kommen zumeist auf Trägerelementen aufgesinterte, rillierte und kalibrierte Sinterreibbeläge zur Anwendung, oder aber organische Reibbeläge, die auf Unterlagen geklebt, rilliert und geputzt werden. Die Wahl für Sinterreibbeläge oder aber organische Reibbeläge erfolgt nach den vorgegebenen Einsatzbedingungen.

Nachteilig bei allen bekannten Systemen der genannten Art ist insbesonders der Umstand, daß die jeweiligen Reibwerte und Verschleißraten von der spezifischen Belastung, den jeweiligen Gegenreibflächen und den verwendeten Ölen stark abhängig sind. So versagen beispielsweise organische Reibbeläge bei hohen Anpreßdrücken oder ergeben sogenannte "Hot Spots" bei hoher Belastung und zu geringer Kühlung. Sinterreibbeläge zeigen andererseits bezüglich des erzielbaren Reibwertes eine starke Abhängigkeit vom verwendeten Öl, ergeben bei hoher Relativgeschwindigkeit und geringer Kühlung Sinterübertrag auf die Gegenfläche und arbeiten bei geringer Flächenpressung eher ungleichmäßig. All diese Nachteile führen letztlich zum Ausfall des Reibsystems bzw. der damit ausgestatteten Baugruppe (Kupplung, Bremse, Synchronisiereinrichtung und dergleichen).

Aufgabe der vorliegenden Erfindung ist es, ein Reibsystem der eingangs genannten Art so auszubilden, daß die erwähnten Nachteile bekannter derartiger Systeme vermieden werden und daß insbesonders ein Reibsystem geschaffen wird, welches in weiten Belastungsgrenzen ölunabhängige und konstante Reibwerte mit sehr kleinen Verschleißraten ergibt.

Die Erfindung geht aus von der Überlegung, daß weitgehend ölunabhängige, hohe Reibwerte bei derartigen Systemen primär durch eine Erhöhung des Anteiles der unmittelbaren Festkörperreibung zwischen den Reibpartnern erzielbar wären. Dem steht bei derartigen naßlaufenden Reibsystemen allerdings der Umstand entgegen, daß der Ölfilm zwischen den Reibpartnern, wie sich herausgestellt hat, nicht alleine durch Kraft bzw. Druck zu durchbrechen ist, um bereichsweise bzw. wenigsten punktuell Festkörperreibung zu erreichen. Dies in Betracht ziehend, geht die Erfindung weiters davon aus, daß zur letztendlichen Beseitigung des an den potentiellen Bereichen für Festkörperreibung üblicherweise immer noch vorhandenen dünnen Ölfilms thermische Hilfe in Anspruch genommen wird, um an diesen Bereichen den durch Druck im dynamischen Bewegungszustand der beiden Reibpartner nicht zu entfernenden Ölfilm zu verdampfen.

Ausgehend von diesen Überlegungen bzw. Erkenntnissen löst die vorliegende Erfindung die gestellte Aufgabe bei einem Reibsystem der eingangs genannten Art dadurch, daß der Reibbelag in Richtung senkrecht weg von der Oberfläche ein abnehmendes Verhältnis von Wärmekapazität zu Wärmeleitfähigkeit aufweist, welches an einzelnen Reibpunkten der Oberfläche unter thermischer Beseitigung des Öles Festkörperreibung ohne Freßneigung der Reibkörper ergibt. Durch diesen bestimmten Verlauf der Materialeigenschaften Wärmekapazität und Wärmeleitfähigkeit auf der Seite des beschichteten Reibpartners wird einerseits an der Oberfläche der Reibschichte genug von der durch die Reibung selbst erzeugten Wärme gehalten um punktuell bzw. bereichsweise unter Verdampfung des sonst verbleibenden Ölfilms Festkörperreibung zu bewirken - andererseits ist sichergestellt, daß nicht zu viel der entstehenden Reibwärme im Bereich des unmittelbaren Zusammenwirkens der beiden Reibpartner verbleibt, womit das Auftreten von "Hot Spots" bzw. ein Festfressen zwischen den Reibpartner vermieden wird.

Ein erfindungsgemäß ausgebildetes Reibsystem ergibt eine überraschend eindeutige Verbesserung im ölabhängigen dynamischen Reibwert-Niveau. Die bisher in Abhängigkeit von der verwendeten Ölsorte bis zu 50 % betragenden Schwankungen des Reibwertes konnten bei der erfindungsgemäßen Ausbildung auf etwa 5 % reduziert werden. Die mit der erfindungsgemäßen Ausbildung erzielbaren Verbesserungen sind insofern auch für den Fachmann überraschend, als bisher mit einer Steigerung der Reibarbeit bis auf etwa 3,6 J/mm² und der Reibleistung bis auf etwa 5 W/mm² der dynamische Reibwert kontinuierlich kleiner und die Verschleißrate ebenso größer wurde. Mit dem erfindungsgemäßen Reibsystem, bestehend aus einem Synchronring, der mit 6m/s bei 4,3 N/mm² Belastung im Öl TAF 23, 75W-90, für 20.000 Zyklen gefahren wurde, konnte jedoch ein praktisch konstanter Reibwert von 0,12 mit einer Verschleißrate von 0,03 mm pro Reibfläche erreicht werden. Wesentlich für diese überraschend herausragenden Eigenschaften des erfindungsgemäßen Reibsystems sind die Verhältnisse der Wärmekapazität und Wärmeleitfähigkeit des Reibbelages. Durch das entsprechende Verhältnis von erzeugter Wärme an den Reibpunkten bzw. -bereichen und abgeführter Wärmemenge in die unteren Bereiche des Reibbelags bzw. den Träger kann ein stabiler dynamischer Reibwert und eine sehr geringe Verschleißrate gesichert werden.

In besonders bevorzugter Ausgestaltung der Erfindung ist vorgesehen, daß der Reibbelag aus zumindest zwei in sich zumindest weitgehend homogenen Schichten aufgebaut ist. Obwohl für die erfindungsgemäße Ausgestaltung des Reibsystems auch ein Reibbelag mit mehr oder weniger kontinuierlicher Änderung der Zusammensetzung und damit der Eigenschaften in Richtung senkrecht zur Oberfläche möglich wäre, ist die letztgenannten Ausgestaltung insbesonders dann vorzuziehen, wenn auf eine einfache Herstellung Wert gelegt wird. Die Materialeigenschaften der einzelnen Schichten sind in diesem Falle relativ einfach aufeinander abzustimmen.

In weiterer Ausgestaltung der zuletzt angesprochenen Ausbildung der Erfindung ist vorgesehen, daß eine untere Leitschichte mit hoher Wärmeleitfähigkeit, vorzugsweise bestehend aus einer Kupferlegierung, von einer dünnen, elastischen Reibschichte, vorzugsweise bestehend aus tribologisch stabilem Werkstoff in Form von Kohlenstoff und Oxidkeramik, mit einem organischen Binder überdeckt ist. Dieser Aufbau des Reibsystems sichert auf einfache Weise die Bereitstellung der für die Erzielung des angestrebten Effektes notwendigen Materialeigenschaften bzw. deren erforderliche Verläufe bezogen auf die Richtung senkrecht weg von der Oberfläche des Reibbelages.

Das Verhältnis der Wärmekapazität von unterer Leitschichte zu oberer Reibschichte liegt in weiterer Ausgestaltung der Erfindung bevorzugt im Bereich von 1,35:1 bis 14:1 und das entsprechende Verhältnis der Wärmeleitfähigkeit im Bereich von 44:1 bis 123:1. Diese Bereiche haben im Zusammenhang mit dem oben angesprochenen Schichtaufbau des Reibbelages sehr vorteilhafte Reibwerte einerseits und Verschleißzahlen andererseits ergeben.

Die untere Leitschichte besteht nach einer anderen vorteilhaften Ausgestaltung der Erfindung aus einer porösen Kupfer-Zink-Zinnlegierungsschichte mit einer Wärmekapazität von zumindest annähernd 3,8 J/cm³.°K und einer Wärmeleitfähigkeit von zumindest annähernd 1,7 W/cm.°K, wobei die obere Reibschichte aus einer organisch gebundenen Kohlenstoff-Oxidkeramik-Schichte mit einer Wärmekapazität von zumindest annähernd 0,7 J/cm³.°K und einer Wärmeleitfähigkeit von zumindest annähernd 0,02 W/cm.°K besteht. Es ergibt sich mit dieser Ausgestaltung eine einfache Herstellung mit einem sehr günstigen Verlauf des Verhältnisses von Wärmekapazität zu Wärmeleitfähigkeit bezogen auf die Richtung senkrecht weg von der Oberfläche des Reibbelages.

Nach einer weiters bevorzugten Ausgestaltung der Erfindung liegt das Dickenverhältnis von oberer Reibschichte zu unterer Leitschichte im Bereich von 1:4 bis 1:11, was zusammen mit den oben angesprochenen Verhältnissen von Wärmekapazität zu Wärmeleitfähigkeit eine weitere Verbesserung im Hinblick auf den Wärmehaushalt des Reibbelages ergibt.

Zur Beeinflußung des Reibwertes der oberen Reibschichte kann in weiters bevorzugter Ausgestaltung der Erfindung das Verhältnis des Anteils von Kohlenstoff zum Anteil der oxidkeramischen Anteile verändert werden. So werden beispielsweise bei Verwendung von ausschließlich Kohlenstoff in Form von Ruß und Koks im Verhältnis 33:20 Reibwerte von 0,11 erhalten. Ändert man dieses Verhältnis in Ruß:Koks:Quarz in 33:20:20, so stellt sich ein Reibwert von 0,12 ein. Wird das Verhältnis bis auf Ruß:Quarz auf 33:20 verändert, so erhält man Reibwerte von 0,14. Diese Reibwerte wurden in Getriebeöl TAF 23, 75W-90, mit Leistungskennwert GL 4, bzw. SAF 66, 75W-90 mit Leistungswert GL 5 und voll synthetischen Ölen, sowie in reinem Polyalphaolefin unter Belastungen bis zu 3,6 J/mm² in einer Bremse und bei Belastungen bis zu 2,05 J/mm² in einer Synchronisation erreicht.

Bei der Anwendung des beschriebenen erfindungsgemäßen Reibsystems ergeben sich sowohl für den Konstrukteur wie auch für den Anwender von Bremsen, Kupplungen, Synchronisierungen und dergleichen erhebliche Vorteile. Der konstante, ölunabhängige Reibwert sichert einerseits den vom Konstrukteur gewollten Effekt und vermeidet andererseits eine Überlastung oder ein Versagen unter Dauerlast. Von besonderer Bedeutung ist ein derartiger öl- und belastungsunabhängiger Reibwert bei Synchronisationsanwendungen, da ein absinkender Reibwert zum Unterschreiten der Funktionsgrenzen der Synchronisation und ein steigender Reibwert z.B. zur Unlösbarkeit des Synchronringes aus dem Konus und damit zu Getriebeschäden führt.

Die Erfindung wird im Folgenden anhand des schematischen Schnittbildes eines erfindungsgemäßen Reibsystems sowie von drei Ausführungsbeispielen näher erläutert.

Der in der Darstellung mit 1 bezeichnete Bereich ist der Gegenreibwerkstoff des Reibsystems, also beispielsweise eine Bremstrommel. Er besteht im Normalfall aus vergütetem Stahl. Mit 2 ist der Oberflächenfilm des beschichteten Reibpartners, also die eigentliche Reibschichte bezeichnet, welche die relativ kleiner Wärmeleitfähigkeit besitzt. Mit 3 ist die Schicht mit der höheren Wärmeleitfähigkeit, respektive die Leitschichte bezeichnet, welche beispielsweise aus einer kupferreichen Matrix besteht.

Mit 4 ist eine Verbindungsschicht zwischen der Reibschichte 2 und der Leitschichte 3 bezeichnet, welche im Normalfall eine Dicke von etwa 0,02 mm aufweist und die dadurch entsteht, daß in die Poren der Leitschichte 3 Bestandteile der Reibschichte 2 beim Beschichten eindringen. Durch diese Durchdringung der Schichten 3 und 2 wird eine hohe Haftfestigkeit zwischen beiden gesichert.

Der Ölfilm zwischen den beiden Reibpartnern ist in der schematischen Darstellung mit 5 bezeichnet. Mit dem Bezugszeichen 6 ist ein beispielsweise aus Stahl bestehender Träger bezeichnet, auf dem der hier aus den Schichten 2 bis 4 bestehende Reibbelag angebracht ist. Mit 7 sind schließlich die einzelnen Bereiche gekennzeichnet, in denen durch die Wärmebarriere der oberen Reibschichte 2 eine Verdampfung des Ölfilms 5 erfolgt bzw. die hier erwünschte Festkörperreibung stattfindet.

In den folgenden Ausführungsbeispielen ist - soweit möglich - mit den Bezugszeichen auf die oben besprochene schematische Ausführung hingewiesen.
1. Stahlträger 6 mit φ 177,5 mm werden mit einer Kupfer-Zinnlegierung 85/15 im Streusinterverfahren mit einer Schicht 3 von 0,80 mm besintert und mit einer Filmdicke von 0,07 mm mittels Siebdruckverfahren bedruckt. Der Film 2 besteht aus einer Nitrilkautschuk-Phenolharz-Basis mit 31 M% Ruß, 20 M% Koks und 5 M% Quarz. Nach der Trocknung bei 60 °C erfolgt die Aushärtung des Phenolharzes bei 200 °C für 20 min. Danach wird der Verbund der beiden Schichten gemeinsam rilliert und kalibriert. Am Ende besteht der Reibverbund aus einer 0,5 mm dicken unteren Bronzeschicht 3, einer Übergangsschicht 4 von 0,02 mm und einer 0,05 mm dicken oberen elastischen Schicht 2.
   Die Wärmekapazität der Kupfer-Zinn-Streusinterschicht 3 betrug 3,43 J/cm³°K und ihre Wärmeleitfähigkeit 1,57 W/cm°K. Der Oberflächenfilm 2 hatte eine Wärmeleitfähigkeit von 0,04 W/cm°K und eine Wärmekapazität von 0,79 J/cm³°K. Das Verhältnis der Wärmeleitfähigkeit von unterer zu oberer Schicht betrug somit 39,25. Die Prüfung dieses Reibsystems bei 2,46 J/mm² Reibarbeit und Reibleistungen von 0,96 W/mm², 1,74 W/mm² und 2,67 W/mm² ergab über je 10.000 Schaltungen einen mittleren Reibwert von 0,115 in vollsythetischem Öl auf Polyalphaolefinbasis. Der Verschleiß einer Reibfläche lag bei 0,022 mm nach 10.000 Schaltungen.
2. Sychronringflachteile für den Enddurchmesser 100 mm werden mit einer Kupfer-Zink-Zinnlegierung 75/20/5 im Streusinterverfahren mit einer Schichtdicke 3 von 0,55 mm besintert und mit einem Film 2 von 0,11 mm durch Siebdruckverfahren bedruckt. Die Zusammensetzung des Films besteht aus einer Nitril-Phenolharz-Basis mit 33 M% Ruß, 15 M% Koks und 20 M% Quarz. Die Beschichtung des Flachteilrohlings erfolgte beidseitig. Nach der Trocknung und Aushärtung erfolgt die ziehtechnische Umformung des Flachteils zum Synchronring einschließlich Rillierung. Die Streusinterschicht hatte eine Wärmekapazität von 2,83 J/cm³°K und eine Wärmeleitfähigkeit von 1,55 W/cm°K. Der Oberflächenfilm hatte eine Wärmeleitfähigkeit von 0,03 W/cm°K und eine Wärmekapazität von 0,81 J/cm³°K. Das Verhältnis der Wärmeleitfähigkeiten betrug somit 94,3. Die Prüfung dieses Doppelsynchronringes in einem ATF-Öl bei einer Reibarbeit von 0,46 J/mm² und Reibleistungen von 0,96 W/mm² sowie 1,84 W/mm² zeigte Reibwerte von 0,13 und nach 40.000 Schaltungen einen Axialmaßverschleiß von 0,15 mm. Dies entspricht einer Verschleißrate des Belages von weniger als 0,02 mm.
3. Teile hergestellt wie im Beispiel 2, jedoch alles in einem reinen Polyalphaolefin geprüft. Der Reibwert erreichte einen Wert von 0,128 und der Axialmaßverschleiß lag bei 0,11mm.

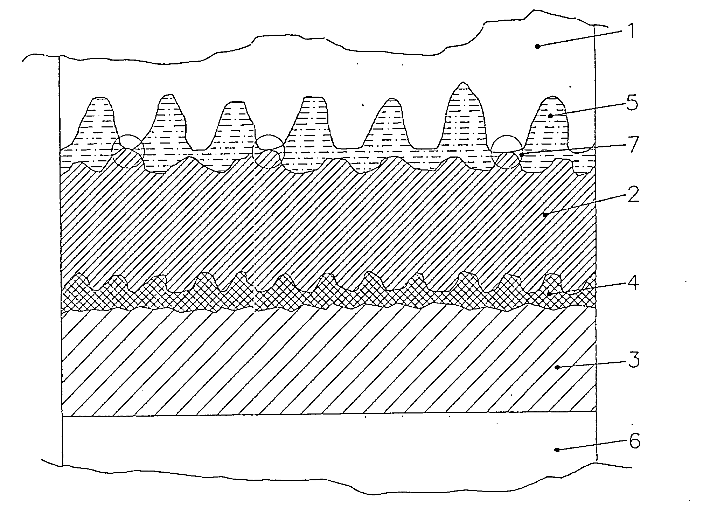

## Patentansprüche

1. Reibsystem, bestehend aus zwei relativ zueinander bewegbaren Reibkörpern, von denen zumindest einer in einem unter Krafteinwirkung mit dem anderen Reibkörper in reibschlüssigen Kontakt bringbaren und dabei Kraft übertragenden Bereich einen Reibbelag aufweist, wobei zumindest der Kontaktbereich der beiden Reibkörper ölbenetzt ist, **dadurch gekennzeichnet, daß** der Reibbelag in Richtung senkrecht weg von der Oberfläche ein abnehmendes Verhältnis von Wärmekapazität zu Wärmeleitfähigkeit aufweist, welches an einzelnen Reibpunkten der Oberfläche unter thermischer Beseitigung des Öles Festkörperreibung ohne Freßneigung der Reibkörper ergibt.

2. Reibsystem nach Anspruch 1, **dadurch gekennzeichnet, daß** der Reibbelag aus zumindest zwei in sich zumindest weitgehend homogenen Schichten aufgebaut ist.

3. Reibsystem nach Anspruch 2, **dadurch gekennzeichnet, daß** eine untere Leitschichte mit hoher Wärmeleitfähigkeit, vorzugsweise bestehend aus einer Kupferlegierung, von einer dünnen, elastischen Reibschichte, vorzugsweise bestehend aus tribologisch stabilem Werkstoff in Form von Kohlenstoff und Oxidkeramik mit einem organischen Binder, überdeckt ist.

4. Reibsystem nach Anspruch 2 oder 3, **dadurch gekennzeichnet, daß** das Verhältnis der Wärmekapazität von unterer Leitschichte zu oberer Reibschichte im Bereich von 1,35 : 1 bis 14 : 1 und das entsprechende Verhältnis der Wärmeleitfähigkeit im Bereich von 44 : 1 bis 123 : 1 liegt.

5. Reibsystem nach einem oder mehreren der Ansprüche 2 bis 4, **dadurch gekennzeichnet, daß** die untere Leitschichte aus einer porösen Kupfer-Zink-Zinn Legierungsschichte mit einer Wärmekapazität von zumindest annähernd 3,8 J/cm³°K und einer Wärmeleitfähigkeit von zumindest annähernd 1,7 W/cm.°K und die obere Reibschichte aus einer organisch gebundenen Kohlenstoff-Oxidkeramik-Schichte mit einer Wärmekapazität von zumindest annähernd 0,7 J/cm³°K und einer Wärmeleitfähigkeit von zumindest annähernd 0,02 W/cm.°K besteht.

6. Reibsystem nach einem oder mehreren der Ansprüche 2 bis 5, **dadurch gekennzeichnet, daß** das Dickenverhältnis von oberer Reibschichte zu unterer Leitschichte im Bereich von 1 : 4 bis 1 : 11 liegt.

7. Reibsystem nach einem oder mehreren der Ansprüche 1 bis 6, **dadurch gekennzeichnet, daß** zur Beeinflussung des Reibwertes der oberen Reibschichte das Verhältnis des Anteils von Kohlenstoff zum Anteil der oxidkeramischen Bestandteile verändert wird.

## Claims

1. A friction system, comprising two friction members which are movable relative to each other and at least one of which has a friction lining in an area which can be brought into friction-locking contact with the other friction member with the application of force and which transmits force in this case, wherein at least the contact area of the two friction members is oil-moistened, **characterized in that** the friction lining has a decreasing ratio of thermal capacity to thermal conductivity in the direction at a right angle away from the surface, the said ratio resulting in friction of the solid bodies at individual friction points of the surface with thermal elimination of the oil without a tendency of the friction members to wear.

2. A friction system according to Claim 1, **characterized in that** the friction lining is formed from at least two layers which are substantially homogeneous in themselves.

3. A friction system according to Claim 2, **characterized in that** a lower conducting layer with a high thermal conductivity, preferably comprising a copper alloy, is covered by a thin, resilient friction layer, preferably comprising a tribologically stable material in the form of carbon and oxide ceramic material with an organic binder.

4. A friction system according to Claim 2 or 3, **characterized in that** the ratio of the thermal capacity of the lower conducting layer to the upper friction layer is in the range of from 1·35 : 1 to 14 : 1 and the corresponding ratio of the thermal conductivity is in the range of from 44 : 1 to 123 : 1.

5. A friction system according to one or more of Claims 2 to 4, **characterized in that** the lower conducting layer consists of a porous copper / zinc / tin-alloy layer with a thermal capacity of at least approximately 3·8 J/cm³K and a thermal conductivity of at least approximately 1·7 W/cm K, and the upper friction layer consists of an organically bonded carbon / oxide-ceramic-material layer with a thermal capacity of at least approximately 0·7 J/cm³K and a thermal conductivity of at least approximately 0·02 W/cm K.

6. A friction system according to one or more of Claims 2 to 5, **characterized in that** the ratio of the thickness of the upper friction layer to the lower conducting layer is in the range of from 1 : 4 to 1 : 11.

7. A friction system according to one or more of Claims 1 to 6, **characterized in that** the ratio of the proportion of carbon to the proportion of oxide-ceramic-material constituents is varied in order to influence the coefficient of friction of the upper friction layer.

## Revendications

1. Système de friction constitué par deux corps de friction mobiles l'un par rapport à l'autre, dont l'un au moins présente une garniture de friction dans une région qui peut être amenée sous l'effet d'une force en contact par friction avec un autre corps de friction et qui, en ce faisant, transmet une force, au moins la région de contact des deux corps de friction étant humectée à l'huile, **caractérisé en ce que** la garniture de friction présente en direction perpendiculaire en éloignement de la surface un rapport décroissant entre la capacité thermique et la conductibilité thermique qui, sur des points de friction individuels de la surface procure, en éliminant l'huile par la voie thermique, une friction solide sans que les corps de friction tendent à gripper.

2. Système de friction selon la revendication 1, **caractérisé en ce que** la garniture de friction est composée par au moins deux couches en elles-mêmes au moins amplement homogènes.

3. Système de friction selon la revendication 2, **caractérisé en ce qu'**une couche conductrice inférieure à haute conductibilité thermique, constituée de préférence par un alliage de cuivre, est recouverte par une couche de friction élastique mince, constituée de préférence par une substance stable du point de vue tribologique, sous forme de carbone et de céramique oxydée avec un liant organique.

4. Système de friction selon l'une ou l'autre des revendications 2 et 3, **caractérisé en ce que** le rapport de la capacité thermique de la couche conductrice inférieure sur celle de la couche de friction supérieure est situé dans la plage de 1,35:1 à 14:1 et **en ce que** le rapport correspondant des conductibilités thermiques est situé dans la plage de 44:1 à 123:1.

5. Système de friction selon l'une ou plusieurs des revendications 2 à 4, **caractérisé en ce que** la couche conductrice inférieure est constituée par une couche d'alliage poreuse cuivre/zinc/étain avec une capacité thermique d'au moins approximativement 3,8 J/cm³°K et une conductibilité thermique d'au moins approximativement 1,7 W/cm°K, et **en ce que** la couche de friction supérieure est constituée par une couche de carbone/céramique oxydée avec un liant organique, avec une capacité thermique d'au moins approximativement 0,7 J/cm³°K et une conductibilité thermique d'au moins approximativement 0,02 W/cm°K.

6. Système de friction selon l'une ou plusieurs des revendications 2 à 5, **caractérisé en ce que** le rapport d'épaisseur entre la couche de friction supérieure et la couche conductrice inférieure est situé dans la plage de 1:4 à 1:11.

7. Système de friction selon l'une ou plusieurs des revendications 1 à 6, **caractérisé en ce que** pour influencer la valeur de friction de la couche de friction supérieure, la part de carbone est variée par rapport à la part de composants en céramique oxydée.
